# EUROPEAN PATENT APPLICATION

(11) **EP 4 012 999 A1**
(43) Date of publication of application: **15.06.2022**
(21) Application number: 20213691.7
(22) Date of filing: 14.12.2020
(51) Int. Cl.: H04L 29/06, H04L 29/08

(54) **METHOD OF THREAT DETECTION IN A THREAT DETECTION NETWORK AND THREAT DETECTION NETWORK**

(71) Applicant: F-Secure Corporation, 00180 Helsinki (FI)
(72) Inventor: STÅHLBERG, Mika, 00180 Helsinki (FI); AKSELA, Matti, 00180 Helsinki (FI)
(74) Representative: Berggren Oy

(57) **Abstract**

A network node (5a-5h) of a threat detection network, a backend server (2) of a threat detection network, a threat detection network and a threat detection method in a threat detection network. The threat detection network comprises interconnected network nodes (5a-5h) and a backend system (2), wherein at least part of the nodes (5a-5h) comprise security agent modules (6a-6h) which collect data related to the respective network node (5a-5h). The method comprises collecting and/or analyzing at the network node (5a-5h) data related to a network node (5a-5h), generating at least one local behavior model at the network node (5a-5h) related to the network node (5a-5h) on the basis of the collected and/or analyzed data, sharing at least one generated local behavior model related to the network node (5a-5h) with one or more other nodes (5a-5h) and/or with the backend system (2), comparing user activity in a node (5a-5h) to the generated local behavior model and/or a received behavior model, and alerting the backend (2) and/or the other nodes (5a-5h ), e.g. about anomalous behavior, if deviation from the generated local behavior model and/or the received behavior model is detected.

## Description

### Technical Field

The present invention relates to a threat detection method in a threat detection network, a network node of a threat detection network, a backend server of a threat detection network and a threat detection network.

### Background

Security systems for computers and computer networks are used to detect threats and anomalies in computers and networks. Examples of such are Endpoint Detection & Response (EDR) and Managed Detection and Response (MDR) products and services. EDR focuses on the detection and monitoring of a breach as it occurs and helps to determine how best to respond the detected breach. The growth of efficient and robust EDR solutions has been made possible in part by the emergence of machine learning, big data and cloud computing. MDR in turn is a managed cybersecurity service providing service for threat detection, response and remediation.

EDR or other corresponding systems deploy data collectors on selected network endpoints (which can be any element of IT infrastructure). The data collectors observe activities happening at the endpoint and then send the collected data to a central, backend system ("EDR backend"), often located in the cloud. When the EDR backend receives the data, the data is processed (e.g. aggregated and enriched) before being analyzed and scanned by the EDR provider for signs of security breaches and anomalies.

A problem with EDR however is that the volume of data produced by the data collectors can be extremely large. Data volume is normally proportional to the activity occurring at a given EDR endpoint so when activity at that EDR endpoint is great, the produced data volume is also great. The immediate consequences of such large volumes of data include decreased quality of service, increased cost of service and increased consumption of resources associated with managing large volumes of data. For example, when high volumes of data need to be processed and made available in a useable format, the associated resource overheads and monetary costs can in some cases be very large for the EDR provider, which in turn can increase the cost of providing EDR to customer organizations. Many organizations thus simply opt not to implement EDR and continue to rely solely on EPP (End Point Protection) solutions, which presents a security risk as basic EPP services do not provide adequate protection against advanced file-less threats.

Some EDR systems have proposed reducing the data overhead by being selective about what data is collected (i.e. a policy of selective data collection limitation). However, this solution is problematic because effective monitoring, detection and forensic analysis often requires as complete a data picture as possible. It is often not possible to know in advance what data will be required to monitor and track a malicious actor. Realizing that key pieces of information were not collected can often put a stop to any investigation, rendering such EDR systems ineffective.

Technologies have been developed over the years for cyber defense which are based on building a reputation for objects such as processes, files, network addresses, and such or analyzing behavior of individual software entities. Advanced targeted attacks, attacks where a well-resourced attacker is not attacking random targets but persistently targets a specific organization or even individual user, have been designed to bypass such defenses. In a typical attack, a hacker on a keyboard somehow steals or guesses the access credentials of a legit user and then uses those credentials to move within the virtual estate of the organization. In these attacks the attacker doesn't "hack in" they "log in".

User and Entity and Behavior Analysis is a term for detecting anomalous behavior of legit entities (such as servers or mobile devices) or users. In one scenario it can be used to detect if a user who typically logs in in the morning from the USA suddenly logs in in the middle of the night from China, or to detect that a typical office worker is suddenly compiling programs or logging into servers from command-line.

The problem the typical UEBA approaches don't cover is a situation where the behavior of a logged in user is not (yet) obviously anomalous or malicious. The attacker can do all kinds of things the user is supposed to do without fear of detection, and it is very likely that attackers might try to mask their behavior even more by even mimicking normal behavior using various forms of automation. Thus, there is a need to recognize also these kind of situations more reliably and with low false positive rate.

There is also a need to reduce costs associated with managing large volumes of data and a need to improve the way in which data is collected and processed in the context of EDR systems while at the same time avoiding significant risks to threat detection capabilities.

### Summary

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

According to a first aspect, the invention relates to a method, e.g. a computer implemented method, of threat detection in a threat detection network, the threat detection network comprising interconnected network nodes and a backend system. At least part of the nodes comprise security agent modules which collect data related to the respective network node. The method comprises collecting and/or analyzing at the network node data related to a network node, generating at least one local behavior model at the network node related to the network node on the basis of the collected and/or analyzed data, sharing at least one generated local behavior model related to the network node with one or more other nodes and/or with the backend system, comparing user activity in a node to the generated local behavior model and/or one or more received behavior models, and alerting the backend system and/or the other nodes, e.g. about anomalous behavior, if deviation from the generated local behavior model and/or the received behavior model is detected, and/or comparing at the backend the received anomalous data with other behavior models, e.g. with other behavior models in the same organization and/or behavior models of known malicious users, and sending from the backend system to the node results and/or data relating to the comparison. The deviation of the detected user activity from the generated local behavior model and/or the received behavior model has to be in one embodiment of the invention sufficient and/or above a certain threshold, that may be predetermined or adaptive, so that an alert is sent. This helps to avoid false positives.

In one embodiment of the invention the agent and/or the node performs at least one of the following actions once deviation from the generated local behavior model and/or a received behavior model is detected: increasing level of data collection, sending the data to the backend that didn't match the generated local behavior model and/or the received behavior model, heightening a risk level of the user, heightening a risk level of the node and/or alerting an operator.

In one embodiment of the invention the agent builds behavior model by collecting and analyzing data relating to user activity utilizing a machine learning model, such as a statistical model, a probabilistic model, deep learning model or other machine learning model.

In one embodiment of the invention the generated or received behavior model is used in monitoring the activity of a user in order to notice changes in behavior which are due to automation, attacks and/or or another user using the same account.

In one embodiment of the invention a same behavioral model essentially covers users with corresponding activity, corresponding behavior and/or corresponding role in the organization.

In one embodiment of the invention the agents collect for example at least one of the following computer usage data for creating the behavior model and/or when comparing user activity to a behavior model: programs executed and frequency thereof, login location, login time, login place, network usage patterns, keyboard layout, keyboard language, typing frequency and/or speed, mouse and touch screen movement patterns, typing errors, syntax and style of command-line commands and arguments, use of clipboard, peripheral devices, such as headphones, camera, screens, printers, USB storage, etc., and/or their activity, screen lock status, use of keyboard shortcuts.

In one embodiment of the invention the system identifies shared accounts used at the nodes and/or in the network and links multiple behavioral models to the identified shared account.

In one embodiment of the invention one or more local behavior models related to the network node are generated by the network node and the at least one common behavior model is generated by the backend system of the computer network and/or by the network node based at least in part on the received local behavior models.

In one embodiment of the invention the threat control network is a threat control swarm intelligence network, and/or the threat control swarm intelligence network comprises a plurality of interconnected network nodes of a local computer network, and the behavior model is shared with the backend and/or nodes of the swarm intelligence network.

According to a second aspect, the invention relates to a network node of a threat detection network, the network comprising interconnected network nodes and a backend system. The network node comprises at least one security agent module which is configured to collect data related to the respective network node and the network node is configured to collect and/or analyze data related to the network node. The network node is further configured to generate at least one local behavior model related to the network node on the basis of the collected and/or analyzed data and further configured to share at least one generated local behavior model related to the network node with one or more other nodes and/or with the backend system. The network node is further configured to compare user activity in a node to the generated local behavior model and/or one or more received behavior models, and to alert the backend and/or the other nodes if deviation from the generated local behavior model and/or a received behavior model is detected, and/or the network node is configured to receive from the backend system results and/or data relating to a comparison at the backend, the comparison comprising comparing the anomalous data with other behavior models, e.g. with other behavior models in the same organization and/or behavior models of known malicious users.

According to a third aspect, the invention relates to a backend server of a threat detection network, the threat detection network comprising interconnected network nodes and a backend system. The backend server comprises at least one or more processors and is configured to receive at least one local behavior model from a network node generated by the network node on the basis of the collected and analyzed data at the network node. The backend server is further configured to receive and alert from a network node, e.g. about detected anomalous behavior, if deviation from the generated local behavior model and/or a received behavior model is detected at the network node. The backend server is further configured to compare at the backend the anomalous data with other behavior models, e.g. with a common behavior model created by the backend server based on at least the one received local behavior model, with other behavior models in the same organization and/or with behavior models of known malicious users, and to send from the backend system to the network node results and/or data relating to the comparison.

According to a fourth aspect, the invention relates to a threat detection network comprising at least one network node according to invention and/or at least one backend server according to the invention. In one embodiment of the invention the threat detection network can comprise only a plurality of nodes and no back end. In this case information, e.g. behavior models, is shared between the nodes. In one embodiment of the invention the threat detection network can comprise at least one network node according to invention and at least one backend server. In this case information, e.g. behavior models, can be shared between the nodes and/or between the nodes and the backend server.

According to a fifth aspect, the invention relates to a computer program comprising instructions which, when executed by a computer, cause the computer to carry out a method according to the invention.

According to a sixth aspect, the invention relates to a computer-readable medium comprising the computer program according to the invention.

With the solution of the invention it's possible to detect anomalies where it seems that the person "behind the keyboard" is not who it is expected to be by understanding subtle behavioral pattern changes that are significant enough, given the past behavior, to suspect malicious activity. For example, users can run scripts, login scripts, and macros, and those will look like a completely different persona than manual operations conducted by the same user - or sometimes it might just be a different person executing the steps. With the solution of the invention this can be detected reliably and in an efficient fashion.

Threat and fraud detection systems can also have a false positive problem. That problem in this context comes from the fact that there are many "normal" situations where e.g. the person (or automation) typing on the keyboard is doing so on behalf of the actual user. The solution of the invention can overcome this problem with an approach where endpoints collaborate directly with one another and/or through a common backend.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### Brief description of the drawings

The embodiments of the invention are illustrated by way of example, and not by way of limitation, in the figures of the accompanying drawings.
- Figure 1: presents schematically an example network architecture of one embodiment of the invention.
- Figure 2: presents an example embodiment of a solution of the present invention comprising two local computer networks and a security service network.
- Figure 3: presents an example of a modular structure of security agents according to an embodiment.

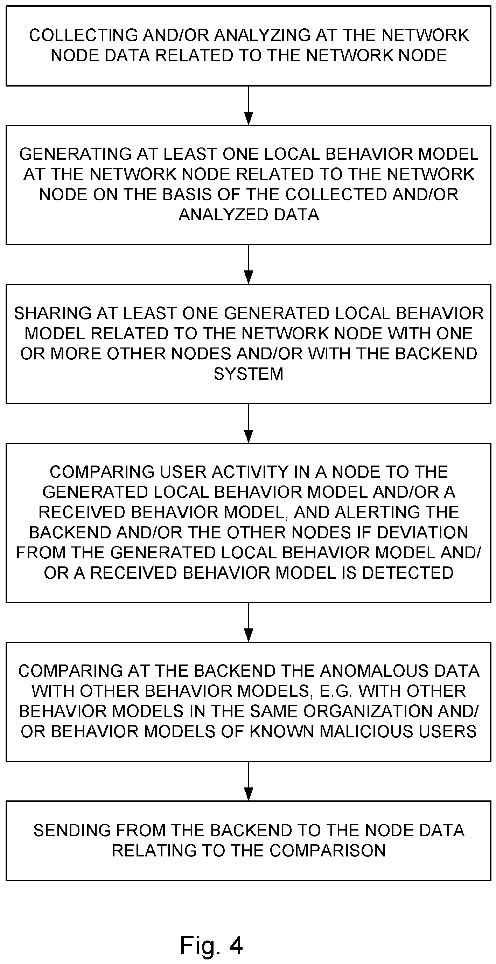

- Figure 4: presents an example method according to one embodiment of the invention.

### Detailed description

A threat detection network according to one embodiment of the invention may comprise at least one network node and at least one backend server. In this case information, e.g. behavior models, can be shared between the nodes and/or between the nodes and the backend server. In one embodiment of the invention the threat detection network can comprise only a plurality of nodes and no back-end server is necessary. In this case information, e.g. behavior models, can be shared between the nodes.

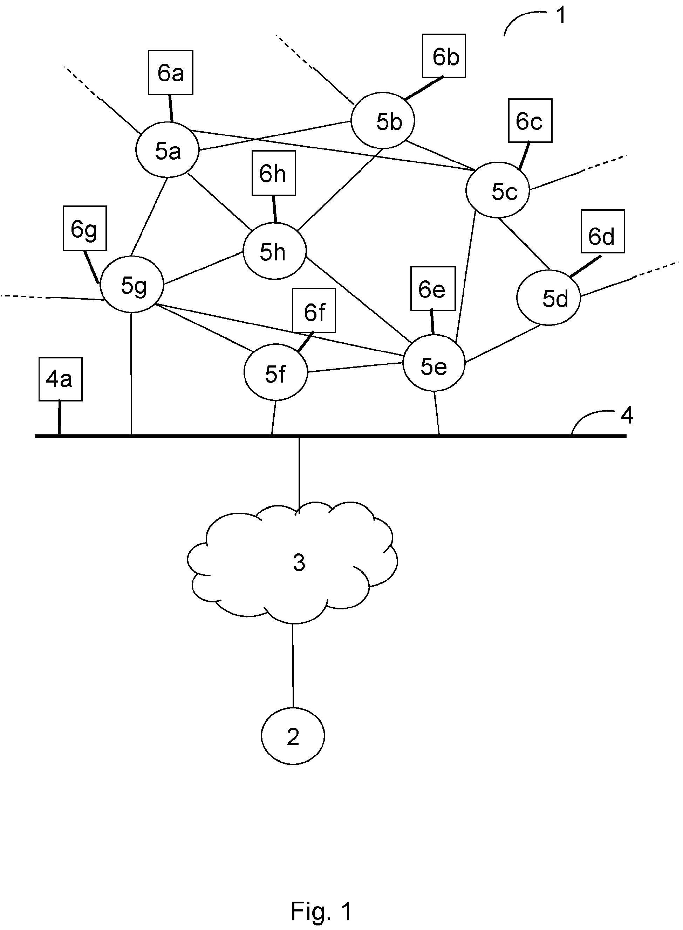

Figure 1 presents schematically an example network architecture of one embodiment of the invention in which the solution of the invention can be used. In Figure 1 a part of a first computer network 1 is schematically illustrated into which a computer system, for example an EDR system, has been installed. Also, any other computer system that is able to implement the embodiments of the invention can be used instead or in addition to the EDR system used in this example. The first computer network is connected to a security service network, here security backend/server 2 through the cloud 3. The backend/server 2 forms a node on the security service computer network relative to the first computer network. The security service computer network can be managed by an EDR system provider and may be separated from the cloud 3 by a gateway or other interface (not shown) or other network elements appropriate for the backend 2. The first computer network 1 may also be separated from the cloud 3 by a gateway 4 or other interface. Other network structures are also possible.

The first computer network 1 is formed of a plurality of interconnected network nodes 5a-5h, each representing an element in the computer network 1 such as a computer, smartphone, tablet, laptop, or other piece of network enabled hardware. Each network node 5a-5h shown in the computer network also represents an EDR endpoint onto which a security agent module 6a-6h, that may include a data collector or "sensor", is installed. Security agent modules may also be installed on any other element of the computer network, such as on the gateway or other interface. In the example of Figure 1 a security agent module 4a has been installed on the gateway 4. The security agent modules, 6a-6h, 4a collect various types of data at the nodes 5a-5h or gateway 4 including, for example, program or file hashes, files stored at the nodes 5a-5h, logs of network traffic, process logs, binaries or files carved from memory (e.g. DLL, EXE, or memory forensics artefacts), and/or logs from monitoring actions executed by programs or scripts running on the nodes 5a-5h or gateway 4 (e.g. tcp dumps).

The data collected may be stored in a database or similar model for information storage for further use. Any kind of behavior models, profiles and/or representations of behaviors of users, applications, services and/or processes may further be constructed at the nodes 5a-5h by a security application, at the backend/server 2, and/or at a second server and be stored in the database. The nodes 5a-5h and the server 2 typically comprise a hard drive, a processor, and RAM.

Any type of data which can assist in detecting and monitoring a security threat, such as a security breach or intrusion into the system, may be collected by the security agent modules 6a-6h, 4a during their lifecycle and that the types of data which are observed and collected may be set according to rules defined by the EDR system provider upon installation of the EDR system and/or when distributing components of a threat detection model and/or a behavior model. In an embodiment of the present invention, at least part of the security agent modules 6a-6h may also have capabilities to make decisions on the types of data observed and collected themselves. For example, the security agents 6a-6h, 4a may collect data about the behavior of programs running on an EDR endpoint and can observe when new programs are started. Where suitable resources are available, the collected data may be stored permanently or temporarily by the security agent modules 6a-6h, 4a at their respective network nodes or at a suitable storage location on the first computer network 1 (not shown).

The security agent modules 6a-6h, 4a are set up such that they send information such as the data they have collected or send and receive instructions to/from the EDR backend 2 through the cloud 3. This allows the EDR system provider to remotely manage the EDR system without having to maintain a constant human presence at the organization which administers the first computer network 1.

In one embodiment of the invention, the security agent modules 6a-6h, 4a can also be configured to establish an internal network, e.g. an internal swarm intelligence network, that comprises the security agent modules of the plurality of interconnected network nodes 5a-5h of the local computer network 1. As the security agent modules 6a-6h, 4a collect data related to the respective network nodes 5a-5h of each security agent module 6a-6h, 4a, they are further configured to share information that is based on the collected data in the established internal network. In one embodiment a swarm intelligence network is comprised of multiple semi-independent security nodes (security agent modules) which are capable of functioning on their own as well. Thus, the numbers of instances in a swarm intelligence network may well vary. There may also be more than one connected swarm intelligence networks in one local computer network, which collaborate with one another.

The security agent modules 6a-6h, 4a are further configured to use the collected data and information received from the internal network for generating and adapting models related to the respective network node 5a-5h and/or its users. Models can be for example user behavior models, threat detection models, etc.

In one embodiment of the invention an agent at the network node, e.g. an endpoint agent, locally collects and analyzes data which us used to build a behavior model of a user, e.g. a "computer user behavioral persona". Examples of typical data that can be collected for this embodiment can be:
1) Programs executed and/or frequency thereof
2) Login location, time and/or place
3) Network usage patterns
4) Keyboard layout (e.g. language)
5) Typing frequency and/or speed
6) Mouse and/or touch screen movement patterns
7) Typing errors
8) Syntax and/or style of command-line commands and/or arguments
9) Use of clipboard (e.g. copy paste)
10) Peripheral devices and/or their activity, devices being for example headphones, cameras, screens, printers, USB storage, etc.
11) Screen lock status
12 Use of keyboard shortcuts

The system can learn the behavioral persona of each user or user account based on the collected information. This persona can be learned locally at a network node, e.g. at the endpoint, and the analysis can be done there. Thus, there is no need to send vast amounts of data to the backend system and/or to other nodes. This way the privacy of the users can be ensured in a better way as less data needs to be transferred. The resulting behavior model, e.g. a model constructed by a machine learning model, that represents the persona will be sent to the backend system allows for both shared learning and comparison against the same persona profile across multiple endpoints.

When an agent at the node, e.g. endpoint, detects that the behavior of the user doesn't match the normal behavior model pattern, it can alert the backend system and/or other nodes. At this point the agent can for example increase level of data collection and/or also send the data that didn't match the model to the backend, and/or carry out other actions to secure the computer network and/or any related network node, such as restricting network connectivity of the endpoint.

In order to prevent false positives the backend system can then compare the received anomalous data for example with other behavior models in the same organization. In one embodiment of the invention for example the behavior models of IT workers, login scripts and other tools, network administrators, and colleagues are compared to the received anomalous. The backend can compare the behavior model to other anomalous or even behavior models of known malicious users seen earlier. In one embodiment of the invention also shared accounts can be identified and in one embodiment these models can relate to multiple behavioral models as multiple humans use a same account.

There can also be software that performs "user imitation" - for example, clicks on UI buttons very fast. This kind of software can be used for robotic process automation, software testing, or just to help the user with repetitive tasks. In one embodiment of the invention the system of the invention can identify these kind of cases by monitoring and/or detecting what other software is running and the time of the user action. The system can also monitor which applications are injecting mouse movements, clicks and/or typing, for example by monitoring SendMessage activity on Windows, to be able to identify these kind of false positive situations.

There can also be users in an organization that log into many endpoints with their own account. Most typical ones are administrator users who log into servers. Also, IT helpdesk-type users log into laptops and other devices belonging to other users. As the backend receives the behavior models from various endpoints, it can compare them. It's expected that a user's behavior has similar characteristics across endpoints.

If, after the analysis, the behavior or activity is still considered to be anomalous or even suspected to be an attacker, the system can raise an alert or send an instruction so that network nodes, the system and/or e.g. incident responders can investigate and react to the anomaly.

In one embodiment of the invention the network nodes comprise an agent which is integrated to the endpoint sensor and capable of monitoring the collected data stream. Based on all the collected information, the agent can build a behavioral model of normal user activity utilizing a suitable machine learning model, which could be for example a statistical model, a probabilistic model or deep learning model. The said model can utilize methods like transfer learning to know from the other models, shared in internal network and collected by the backend system, which features have been able to distinguish between users. The features that are most beneficial for identifying each user can be (e.g. automatically) given preference and weight in the learning process making the models conditional on that user's behavior.

The behavior models can be shared with other agents, other network nodes, e.g. the agents of the internal network, and/or the backend system in a privacy-preserving manner so that minimal information on the actual activities of the users needs to be shared. The backend can utilize methods like federated learning to combine knowledge from multiple endpoints and consolidate models of users across multiple endpoints and/or also utilize hierarchical modelling approaches to learn from behaviors of similar users (normal changes in behavior conditional to the past behavior of the user and similar users, for example change in behavior due to a software update) to avoid false positives.

The behavior models can then be used to monitor the activity of the same user and to notice changes in behavior which may be due to automation, attacks or simply another user using the same account - all potential threat scenarios. Once deviation from the profile is detected, the backend can be notified, risk level of the user and/or endpoint heightened, and/or more detailed data collection activated, potentially alerting an operator or leading to other actions.

Furthermore, the behavioral patterns can also be used to understand similarities between users and provide insights into the behavior of users if desired. This can be applied to use cases such as user segmentation but also to further improve some services, if desired.

One example scenario is presented in the following paragraphs. In this example embodiment raw data related to actions on a network node is received. The raw data may be received/collected from plurality of network nodes (5a-5h), wherein dissimilar data types can be aligned as input events and collected into submissions. There can be multiple different types of events. In one embodiment of the invention the sensor collects events for a few seconds and then sends these collected events in one transmission to reduce the number of network connections and/or requests. The submission processing components can be responsible for an initial pre-processing of all data submissions that are received from various kinds of endpoint sensors.

The raw data related to each network node may be collected by a network node of a computer network, and/or a security server backend from a plurality of network nodes of a computer network. The observed events related to the network node are effectively something measurable that are caused by multitude of underlying processes/actors. Such actors can be actual users or the operating system, for example.

One or more local behavior models related to the network node are generated on the basis of the collected input events. The local behavior model aims to characterize normal behavior of the user or other entity related to the respective network node and the local behavior models related to the network node are generated by each network node locally. The generated one or more local behavior models related to each network node and/or its user(s) may be shared with one or more other network nodes of the computer network, internal network and/or with a security server backend of the computer network.

Most underlying processes/actors related to the observed events have some normal behavior which can be modelled with a sufficiently capable model. In an embodiment, such behaviors may at least in part be shared between hosts and in part local, but also local behaviors share commonalities even if they are not exactly the same. For example all same versions of an operating system exhibit similar background behavior, however, every developer has slightly different practices but tend to use some similar tools and flows. That means that similarity between the background behaviors can be detected among them but instances differ.

In an embodiment, the normal behavior modelling can be accomplished for example via generative model(s). One or more such models may be trained relating to each network node depending on the complexity and the models can take very different forms, for example RNNs (Recurrent Neural Networks) such as a LSTM (Long Short-Term Memory), but many other models are also feasible.

In one embodiment of the invention at least one common model of normal user behavior can be generated on the basis of the local behavior models related to multiple network nodes. The common model of normal behavior may be generated by the security server backend of the computer network and/or by any network node.

In an embodiment, the local behavior models related to multiple network nodes can be utilized to understand the behavior of individual network nodes and information across multiple hosts is utilized to build the common model(s) of normal behavior and then these common learnings are redistributed to cope for example operating system updates or new application versions which may be global but changing and would otherwise cause problems for such models (that are utilizing distributed/federated learning approaches).

In an embodiment, in case the at least one common model of normal behavior is generated by a network node of the computer network, the process may comprise at least part of the network nodes co-operating and aiming to learn common behaviors related to those network nodes. This kind of implementation would be feasible, for example, when a same user controls multiple different computers and/or inside a same organization.

In one embodiment of the invention, one or more of the input events can be filtered by using a measure for estimating the likelihood that the input event is produced by the generated common model of normal behavior and/or by the generated one or more local behavior models. Only input events having a likelihood below a threshold, that may be predetermined or adaptive, of being produced by any one of the models (the common model of normal behavior and the one or more local behavior models) are passed through the filtering. A suitable model can also take into account the volumes of events and/or statistics can be collected to ensure model retraining is possible. This helps to avoid false positives.

Thus, after the at least one common model (or set of models) of normal user behavior has been constructed, it (or they) can be utilized to compare what is observed on a network node/sensor with what would be expected to be observed (i.e. what the model produces). To do the comparison (of the observed events to a model), a probabilistic measure may be established that is used to estimate the likelihood that this event is produced by the model. If this is very unlikely, it may be determined that the event is anomalous and appropriate further actions may be taken to protect the computer network. However, instead of an obvious use case of anomaly detection where every such anomaly is expected to have a meaning, it is here rather considered to be a form of highly effective data reduction. By sharing the generated common model of normal behavior, all events that happen normally can be described in only one large "event" which contains model parameters to describe the normal behavior. This can also be implemented in a privacy preserving way as the model contains none of the actual events.

In one embodiment of the invention in case a known security threat is detected, the security agent module is configured to generate and send a security alert to the internal network and to a local center node (not shown) in the local computer network and to activate security measures for responding to the detected security threat. Further, in case an anomaly that is estimated very likely to be a new threat is identified, the security agent module is configured to verify and contain the threat, generate a new model on the basis of the collected data and received information and share the generated new model to other nodes of the network and/or to the backend system and/or the internal network, such as a swarm intelligence network and/or the local center node.

In one embodiment of the invention if the anomaly is determined to be a false positive e.g. by deeper analysis models or by a human analyst, the logic and/or behavior model is trained not to detect similar and corresponding case again as anomalous.

In an embodiment, further actions may be taken to secure the computer network and/or any related network node when a deviation from normal behavior has been detected, for example increasing level of data collection, sending the data to the backend that didn't match the generated local behavior model and/or the received behavior model, heightening a risk level of the user, heightening a risk level of the node and/or alerting an operator, and/or taking immediate action by changing the settings of the network nodes in order to ensure an attacker is stopped and any traces of their moves is not destroyed. Changing the settings may include, for example, one or more nodes (which may be computers or other devices) being prevented from being switched off in order to preserve information in RAM, a firewall may be switched on at one or more nodes to cut off the attacker immediately, network connectivity of one or more of the network nodes may be slowed down or blocked, suspicious files may be removed or placed into quarantine, logs may be collected from network nodes, sets of command may be executed on network nodes, users of the one or more nodes may be warned that a threat or anomaly has been detected and that their workstation is under investigation, and/or a system update or software patch may be sent from the EDR backend to the nodes in response to detecting a sign of a deviation from normal behavior. In one embodiment of the invention one or more of these actions may be initiated automatically by the above-described models or algorithms. For example, using the above described methods, data has been collected and shared with the nodes in the computer network and the EDR backend and a threat model or an analysis algorithm has determined that a deviation from normal behavior was detected. As soon as the model/algorithm makes the determination that a deviation from normal behavior was detected, it may generate and issue a command to the related network nodes without human intervention to automatically initiate one or more of the above-described actions at the nodes. By doing this, a breach can be stopped and/or the damage minimized automatically at very high speeds and without human intervention.

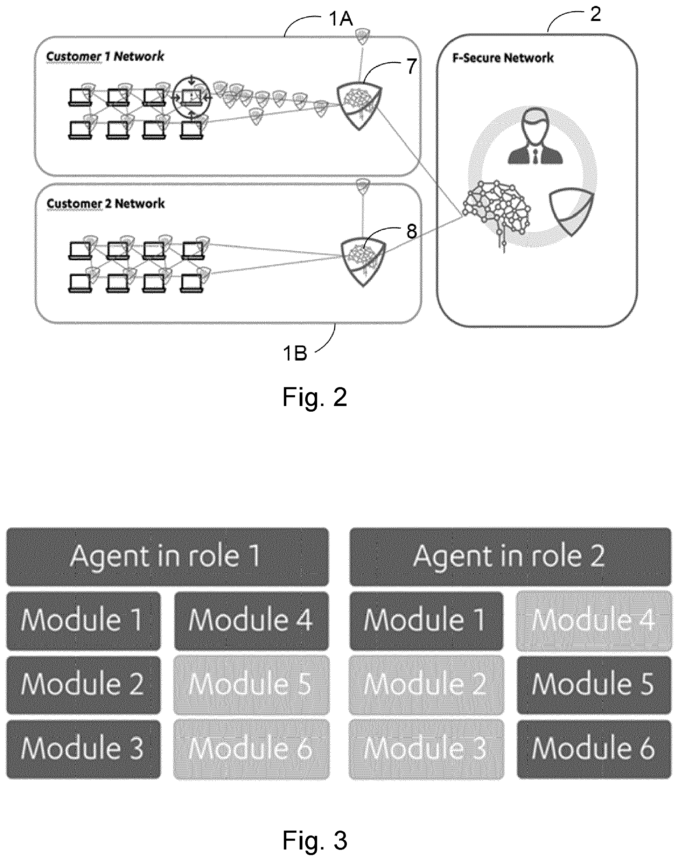

Figure 2 illustrates a high-level concept of one embodiment of the invention. The example of Figure 2 presents two local computer networks 1A, 1 B, and a security service network 2, wherein each local computer network 1A, 1 B further comprises a local center node 7, 8 and a plurality of interconnected network nodes and a security agent module in each of the plurality of network nodes. The security agent modules can be configured to establish an internal swarm intelligence network in each local computer network. The behavior models created in the solution of the invention can be shared between the computer networks, local center nodes, network nodes and the backend system.

In an example normal mode of operation, the agent's deployment structure can consist of on average one agent residing on one endpoint, together with a local communications node and information aggregation center (local center node 7,8). In an embodiment, as illustrated in Figure 3 the security agents may be built such that at least some of their functionalities are inactive even if present thereby allowing for replication of new agents also into different roles than the original host has.

In an embodiment, the security agent modules are able to activate one or more components of their modular architecture and to replicate themselves. Further, in case any of the security agent modules detects the need for further resources for managing the detected security threat or for analysis of the suspected security threat, the security agent modules may in one embodiment of the invention request resources from other security agent modules or even generate new virtual security agent modules.

In an embodiment, the security agent modules use sandboxing techniques for determining a remedy for the detected security threat and/or further analyzing the behavior of potentially malicious entities. The sandboxing can be utilized to execute suspicious code or actions in an environment where the outcome can be observed, and the validity of the threat established.

In an embodiment, a suspicious event among the monitored events may be detected by one or more detection mechanisms used. In an embodiment, the detection mechanisms used to detect the suspicious event may comprise using at least one of: a machine learning model, a scanning engine, a heuristic rule, a statistical anomaly detection, fuzzy logic based models, any predetermined rules.

In an embodiment, the method may further comprise training machine learning models used in the detection of threats and/or as a response to threats by utilizing one or more following approaches used for training machine learning models: distributed learning via combining local and global information and model parts, reinforcement learning via getting feedback on successful end results, meta-learning via utilizing external information in the learning process; and/or information sharing to bootstrap models and adjust learning behavior.

Next some practical example steps of an operation according to an embodiment will be described.

Deployment and distributing of the components of the user behavior modelling: In one embodiment of the invention, in which all agents may fundamentally have the same code base and/or ability to adapt to their role by activating different components in their modular architecture and replicate themselves, one would merely need to deploy one initial agent in a customer network with sufficient access rights, which would then discover servers and install copies of itself in the suitable locations and establish the internal communications network, e.g. an internal swarm communications network, as well as the backend update, reporting and communication channel. In addition, authentication and other required issues may need to be considered, and in first incarnations agents may be deployed on individual hosts.

Normal operation: The agents continuously monitor their environment and collect data, learning from what they see and build models, e.g. behavioral models. These models may be shared across swarm nodes and used for learning, for example of users' behavior on one computer vs. others in the network. Additionally, abstract information may be sent to the backend in a privacy preserving way. The agents utilize the abovementioned learning models to be prepared also for knowing what is normal.

Encountering a known threat: The agents detecting either a known threat or an anomaly indicating a known threat may instantly alert their swarm mates of the situation, also to prepare for threats that may deactivate them, and call for additional resources if needed (spin up new virtual agents or have them delivered from another host if there is risk of compromise). A known threat can be detected based on the user behavior when comparing the detected behavior to the behavior model. If the agent already has the means for response, that action may be taken.

Encountering a novel threat: The agents, due to constantly learning what is normal and in a very granular manned due to their specificity with the data of their own nodes combined with the broader view of possible global, organization or user group level models, are also well equipped to detect novel threats. Their ability to interact with the users may be used to verify the threat, and if the threat is verified, take actions to contain it as well as build a new threat model that will be circulated, to both swarm mates and also other customers through the central link. Also, a novel threat or anomaly can be detected based on the user behavior when comparing the detected behavior to the behavior model and observing significant deviations. In some embodiments, the risk of the threat may be determined to be so great that autonomous containment actions may also be taken before awaiting a final decision. The degree of autonomous actions can always be adjusted as needed. The connectivity model also allows for the help of human experts to be called upon if needed.

Backend preparation: Constantly during operation, generated behavior models of the users and/or information on events and/or threats can be abstracted and sent to the backend. This enables a backend "laboratory" to continue experimentation on more effective defense tools in a secure environment as well as provides further correlation and analysis of the data sent from the multitude of individual intelligent sensors. Backend can also share behavioral models to the network nodes.

As described above, the nature of the model used by the system (e.g. EDR) may be, or may incorporate elements, from one or more of the following: a neural network trained using a training data set, exact or heuristic rules (e.g. hardcoded logic), fuzzy logic based modelling, and statistical inference based modelling. The model may be defined to take into account e.g. particular usage patterns of a node, files, processes, connections, and dependencies between processes.

Although the invention has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims. Each feature disclosed or illustrated in the present specification may be incorporated in the invention, whether alone or in any appropriate combination with any other feature disclosed or illustrated herein. Lists and groups of examples provided in the description given above are not exhaustive unless otherwise explicitly stated.

## Claims

1. A method of threat detection in a threat detection network, the threat detection network comprising interconnected network nodes and a backend system,
wherein at least part of the nodes comprise security agent modules which collect data related to the respective network node, the method comprising:
collecting and/or analyzing at the network node data related to a network node,
generating at least one local behavior model at the network node related to the network node on the basis of the collected and/or analyzed data,
sharing at least one generated local behavior model related to the network node with one or more other nodes and/or with the backend system,
comparing user activity in a node to the generated local behavior model and/or a received behavior model, and alerting the backend and/or the other nodes, e.g. about anomalous behavior, if deviation from the generated local behavior model and/or the received behavior model is detected, and/or
comparing at the backend the received anomalous data with other behavior models, e.g. with other behavior models in the same organization and/or behavior models of known malicious users, and sending from the backend system to the node results and/or data relating to the comparison.

2. A method according to claim 1, wherein once deviation from the generated local behavior model and/or a received behavior model is detected, the agent and/or the node performs at least one of the following actions: increasing level of data collection, sending the data to the backend and/or other nodes that didn't match the generated local behavior model and/or the received behavior model, heightening a risk level of the user, heightening a risk level of the node and/or alerting an operator.

3. A method according to claim 1 or 2, wherein the agent builds behavior model by collecting and analyzing data relating to user activity utilizing a machine learning model, such as a statistical model, a probabilistic model and/or deep learning model.

4. A method according to any preceding claim, wherein the generated or received behavior model is used in monitoring the activity of a user in order to notice changes in behavior which are due to automation, attacks and/or or another user using the same account.

5. A method according to any preceding claim, wherein a same behavioral model essentially covers users with corresponding activity, corresponding behavior and/or corresponding role in the organization.

6. A method according to any preceding claim, wherein the agents collect at least one of the following computer usage data for creating the behavior model and/or when comparing user activity to a behavior model: programs executed and frequency thereof, login location, login time, login place, network usage patterns, keyboard layout, keyboard language, typing frequency and/or speed, mouse and touch screen movement patterns, typing errors, syntax and style of command-line commands and arguments, use of clipboard, peripheral devices, such as headphones, camera, screens, printers, USB storage, etc., and/or their activity, screen lock status, use of keyboard shortcuts.

7. A method according to any preceding claim, wherein the system identifies shared accounts used at the nodes and/or in the network and links multiple behavioral models to the identified shared account.

8. A method according to any preceding claim, wherein one or more local behavior models related to the network node are generated by the network node and at least one common behavior model is generated by the backend system of the computer network and/or by the network node based at least in part on the received local behavior models.

9. A method according to any preceding claim, wherein the threat control network is a threat control swarm intelligence network, and/or the threat control swarm intelligence network comprises a plurality of interconnected network nodes of a local computer network, and the behavior model is shared with the backend and/or nodes of the swarm intelligence network.

10. Network node of a threat detection network, the network comprising interconnected network nodes and a backend system, wherein
the network node comprises at least one or more processors and at least one security agent module which is configured to collect data related to the respective network node, and the network node is configured to collect and/or analyze data related to the network node,
the network node is further configured to generate at least one local behavior model related to the network node on the basis of the collected and/or analyzed data,
the network node is further configured to share at least one generated local behavior model related to the network node with one or more other nodes and/or with the backend system,
the network node is further configured to compare user activity in a node to the generated local behavior model and/or a received behavior model, and to alert the backend and/or the other nodes, e.g. about anomalous behavior, if deviation from the generated local behavior model and/or a received behavior model is detected, and/or
the network node is configured to receive from the backend system results and/or data relating to a comparison carried out by the backend system, the comparison comprising comparing the anomalous data received by the with other behavior models, e.g. with other behavior models in the same organization and/or behavior models of known malicious users.

11. A backend server of a threat detection network, the threat detection network comprising interconnected network nodes and a backend system, wherein
the backend server comprises at least one or more processors and is configured to receive at least one local behavior model from a network node generated by the network node on the basis of the collected and analyzed data at the network node,
the backend server is further configured to receive and alert from a network node, e.g. about detected anomalous behavior, if deviation from the generated local behavior model and/or a received behavior model is detected at the network node, and
the backend server is further configured to compare at the backend the anomalous data with other behavior models, e.g. with a common behavior model created by the backend server based on at least the one received local behavior model, with other behavior models in the same organization and/or with behavior models of known malicious users, and to send from the backend system to the network node results and/or data relating to the comparison.

12. A threat detection network comprising:
at least one network node according to claim 10, and/or
at least one backend server according to claim 11.

13. A threat detection network wherein the threat detection network is configured to carry out a method according to any claim 2 - 9.

14. A computer program comprising instructions which, when executed by a computer, cause the computer to carry out the method according to any of claims 1 - 9.

15. A computer-readable medium comprising the computer program according to claim 14.
